(19) **Europäisches Patentamt European Patent Office Office européen des brevets**

(11) **EP 1 919 137 A1**

(12) # EUROPEAN PATENT APPLICATION

(43) Date of publication:
**07.05.2008 Bulletin 2008/19**

(51) Int Cl.:
**H04L 12/56** (2006.01)

(21) Application number: **06425744.7**

(22) Date of filing: **30.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Nokia Siemens Networks GmbH & Co. KG**
**81541 München (DE)**

(72) Inventors:
• **Pierobon, Massimiliano**
  **20059 Vimercate (MI) (IT)**
• **Prati, Luca**
  **44100 Ferrara (IT)**

(54) **Method for estimating jitter buffer management performance**

(57)    A method is described for determining a Jitter Buffer Management performance. The method is performed by sending a reference data stream from a sender side to a receiver side through a Jitter Buffer Manager under test. The average delay and the number of desequences is based on the value extracted from the comparison between the reference input data stream and the output data stream. A grid that stores unique identifiers of the sender along with the time the packets are sent and stores unique identifiers of the received packets along with the time the packets are received. Records of sent packets are associated with records of received packets so that the time a packet was sent can be compared to the time the same packet was received. Minimum weights are associated to the corresponding associations for all the possible combinations on the grid. A processing can associate additional information relevant to the packet content (speech or silence) in order to estimate Jitter Buffer jitter-induced operation in different way when silence is present. Once the send and receive times are associated as said, a performance measurement is provided by the minimum cost path found analyzing all the paths crossing the nodes of the grid. Such a technique identifies the minimum distance between the input data stream and the output data stream and the resulting information can be used for determination of the performance in terms of average delay and number of packet loss or packet insertions induced by the Jitter Buffer Management (fig.4).

JBM performance evaluation steps

FIG. 4

**Description**

**FIELD OF THE INVENTION**

The present invention relates to the field of telecommunications networks, and more precisely to a method for estimating jitter buffer management performance, as set forth in the preamble of claim 1.

**BACKGROUND ART**

As telecommunications networks grow the measurement of network performance metrics becomes of increasing importance. By measuring such metrics, network algorithm for de-jittering and delay minimization can be tuned in order to provide optimal performance. Voice over IP (VoIP) is a typical application using such network and requesting a high level of quality of service (QoS). A real time communications between a sender and a receiver will then be possible only if such requirement of QoS will be fulfilled. Therefore, it is crucial to control and minimize all delays occurring on such a network. This is obtain among other by storing at the receiver some amount of received data in a buffer before restituting it (dejittering) by means of a Jitter Buffer Manager. In such a way it is possible to rebuild the data stream with the same sequence of packets as when the data stream left the sender.

The delays occurring on a packet-switched network are mostly of two nature, one fixed due to the speed of the stream on that network, and the other variable (jitter) due to the chosen path and mostly to the amount of the already present traffic in that network. Since latter can change a lot from a communication to another or even during a communication e.g. due to some overload of the network at some special hours of the day, it is of interest to measure the characteristics of the used Jitter Buffer Manager (average delay and number of de-sequences) in order to achieve the optimal performance.

The performance requirements for Jitter Buffer Management (JBM) consists of criteria for delay and jitter-induced concealment operations (packet removal from the data stream or packet insertions in the data stream). A performance estimation method evaluates the buffering time in order to limit the end-to-end delay as possible and evaluates the number of jitter-induced concealment operations in order to avoid distortions in the data stream.

The following document: **3GPP TSG-SA4 MTSI ad hoc #2,** presented by the same Applicant during the meeting of 2-4 October 2006, San Diego, CA USA, addresses the problem resumed in its title: "Jitter Buffer Minimum Performance Requirements" by disclosing a Black-Box model approach. Using a black box approach, it is possible to describe the overall JBM impact on a packet stream having:

- Buffer De-sequencing: any difference between the packet arrival sequence and the output packet sequence.
- End-to-end delay increment: increment to the end-to-end delay introduced by JBM.

The Black-Box model can be applied to every JBM implementation, without having to define a specific reference JBM model. The Black-Box model allows performance assessment without the direct knowledge of the JBM implementation. A metric called: "Jitter buffer end-to-end delay average increment" is proposed in the cited document to evaluate the performances of some known JBM algorithms as: "Maximum buffer depth value" and "Time scaling". The end to end delay average increment is the delay that the jitter buffer introduces until the k-th measurement interval. It is possible to compute both Buffer De-sequencing and End-to-end delay increment metric having:

- The *initial waiting time:* time interval between the moment when the first packet enters the jitter buffer and the moment when the first packet of the output is dequeued.

and marking every output packet as:

- *Regular packet* a packet with the expected sequence number.
- *Inserted packet:* a void, repeated or out-of-sequence (lower sequence number than expected) packet inserted by JBM.
- *Advance packet:* an output packet with a higher sequence number than expected (that is the result of one, or more, discarded packets). The number of discarded packet, L, is computed subtracting the advance packet sequence number from the expected one.

Despite a demanding algorithm for calculating the metric is needed, at the end of calculation the Minimum Performance Requirements of the jitter Buffer are still not calculable because the values of specific comparison thresholds are yet to-be-defined (TBD). This fact reflects the provisional nature of the contribution document. Thresholds are referable to three performance parameters of a Black-Box JBM tested for every given delay channel model described in **3GPP S4-AHM013**. Specifically, the thresholds TBD are for: Maximum end-to-end delay increment; Maximum number of packet de-sequences during silence intervals; and Maximum number of packet de-sequences during voice intervals. Silence is detected by means of known Voice Activity Detection (VAD) techniques.

It is an object of the present invention to provide an alternative method to evaluate the JBM performance according to the Black-Box paradigm based on a simpler metric than the one described for the *end-to-end delay average increment* which division of the output stream into K measurement intervals (of N packets) is needed, so as the calculation of the incremental delay variation at step k.

## SUMMARY AND ADVANTAGES OF THE INVENTION

The invention achieves said object by providing a method for testing the performance of known buffering algorithms in terms of average delay and number of de-sequences evaluated at the output when an input data stream affected by time jitter and de-sequences are submitted at the input, as disclosed in claim 1.

Accordingly, the method of the invention is based on the concept, ascertained by the inventors, that given a reference data stream and having the corresponding output it is possible to compute the performance measurement of a JBM implementation using a template (grid) matching technique which provides a measure of the distortion between a reference input and the measured output.

Additional features of the present invention which are believed to be novel are set forth with particularity in the appended claims.

According to the invention, the performance estimation method creates a grid that stores unique identifiers of the sender along with the time the packets are sent and stores unique identifiers of the received packets along with the time the packets are received. Records of sent packets are associated with records of received packets so that the time a packet was sent can be compared to the time the same packet was received. Minimum weights are associated to the corresponding associations for all the possible combinations on the grid. A processing can associate additional information relevant to the packet content (speech or silence) in order to estimate Jitter Buffer jitter-induced operation in different way when silence is present.

Once the send and receive times are associated in accordance with the teachings of the present invention, a performance measurement is provided by the minimum cost path found analyzing all the paths crossing the nodes of the grid. Such a technique identifies the minimum distance between the input data stream and the output data stream and the resulting information can be used for determination of the performance in terms of average delay and number of packet loss or packet insertions induced by the Jitter Buffer Management.

The present invention provides several advantages, for example, it permits a network operator to measure the performance of Jitter Buffer Management with no knowledge of the specific JBM implementation. Additionally it allows a robust measurement for Jitter Buffer Management supporting:

- source-controlled operation as well as non-source-controlled operation
- reordering of packets received in out-of-order sequence
- discarding of duplicated packets
- clock drift between sender and receiver endpoints.

## BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:

- **fig.1** shows a network model useful for implementing the method of the invention;
- **fig.2** shows how the time intervals between packets of a data stream change at the various points along the network model of fig.1;
- **fig.3** shows diagrammatically the Black-Box concept used by the method of the invention to evaluate the performance of the JBM block of the preceding figures;
- **fig.4** is a flow-chart of the JBM performance evaluation method of the invention;
- **fig.5** shows a grid used as evaluation tool by the method of the invention;
- **figures 6** to **9** show the various steps of the method by using the grid.

**DETAILED DESCRIPTION OF AN EMBODIMENT OF THE INVENTION**

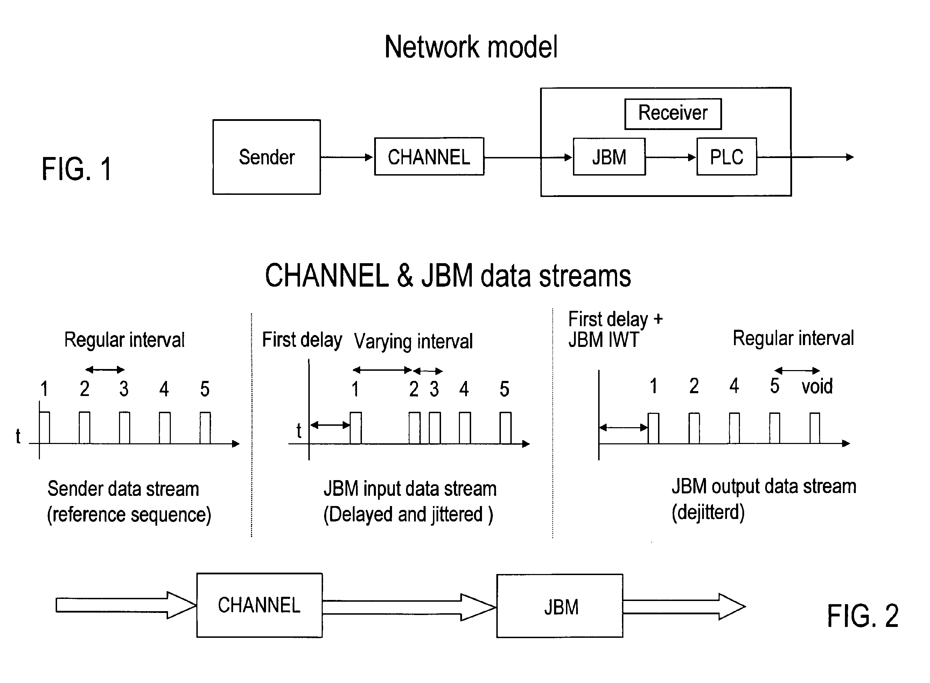

With reference to **fig.1**, a sender and a receiver are located at opposite ends of a network. The network may be any network, wired or wireless or a combination of technologies. Inside the receiver a Jitter Buffer Management unit, a Packet Loss Concealment unit providing procedure for recovery packet losses are included.

**Fig.2**, illustrates the data stream flow between the sender and the Jitter Buffer Management. The packets sent by the sender may experience a variable delay (jitter) crossing the transport channel. The purpose of the Jitter Buffer Management is to hold incoming packets for a specified period of time before forwarding them to the next functional unit in a regular time interval.

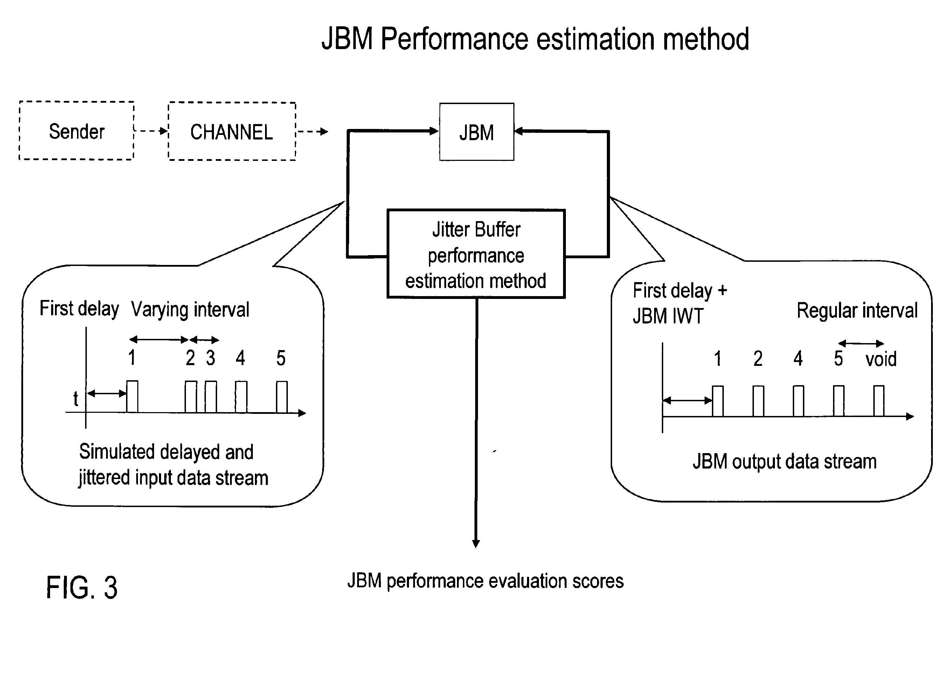

**Fig.3**, illustrates the location inside the network where the method for performance estimation can be applied. The method provides in input to the Jitter Buffer Manager a simulate data streams affected by variable delay (jitter) and stores the dejittered output data stream from the JBM.

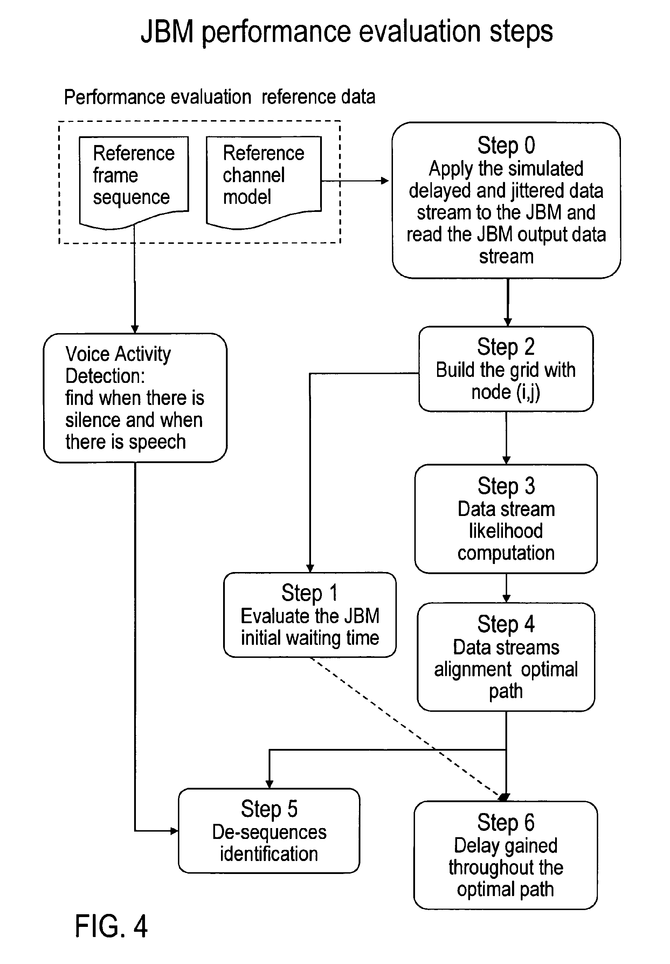

**Fig.4**, shows a general functional diagram and description of the algorithm used for building the performance metric and evaluate the performance of the tested JBM. More in particular, performance evaluation reference data include: Reference frame sequence and Reference channel model. These references are inputted to a preliminary Step 0 and to a VAD functional block which is deputed to find when there is silence and when there is speech in the Reference frame sequence.

Before illustrating the method of the invention, some introductory notions on the jitter and jitter buffering algorithms are useful to a better understanding.

Jitter definition - While in a packet voice environment, the sender is expected to reliably transmit voice packets at a regular interval (for example, send one frame every 20 ms). As packets are transmitted from source to destination, they may experience different delays. As a result, packets arrive at the destination with varying delays. This phenomenon is called 'jitter'.

Jitter Buffer - Dealing with real time applications, such as encoded voice packet transmission, the need of having a regular packet flow at the receiver decoder, with regularly spaced inter-arrival times, is of primary importance. The purpose of the jitter buffer is to hold incoming packets for a specified period of time before forwarding them to the decompression process. Thus, the jitter buffer is designed to smooth packet flow. The packet delay jitter buffer at the receiver's end attempts to neutralize the effects of variation in delay from one packet to the next in the incoming packet voice streams (RTP streams). An artificial delay is added, if necessary, to each packet's arrival time in order to write asynchronously the incoming packets at the head of the buffer. The speech frames are extracted from the tail of the same buffer at a steady rate for proper playback. This delay jitter buffer is elastic, and its occupancy level is allowed to grow (up to the maximum size of the jitter buffer) and to shrink in order to accommodate the delay variations.

Basically, every possible Jitter Buffer Management (JBM) implementation can be distinguished on the basis of:

- The maximum buffer depth value (Qmax) that is set in order to limit the buffer occupancy level. If the fill level reaches this value and there is an incoming packet, it is discarded and its coded speech payload is considered lost (jitter buffer overflow loss).

- The time scaling algorithm that the JBM adopts in order to control the flow of the jitter buffer occupancy level (Q(t)). In a static jitter buffer the time scaling is not applied and the Q(t) value is allowed to freely grow and shrink to accommodate jittered traffic. A JBM that applies time scaling (adaptive jitter buffer) performs packets discarding in order to reduce the Q(t) value and packets insertion (e.g. repeats packets or uses void packets) in order to increase Q(t). The specific time scaling algorithm used by the jitter buffer implementation decides when and how to perform these operations. Whether the jitter buffer is static or dynamic, when a 20ms clock timeout occurs and there is no available queued packet, there is an buffer underflow (a void packet is processed), otherwise, when a packet is received too late to be processed, it is considered a late packet loss.

- The initial waiting time. This is the time interval from when the first packet is received to the moment when the JBM starts de-queuing.

The maximum buffer depth value and the time scaling algorithm are quantities with a direct relation to the packet stream processing in terms of packet insertion or discarding. After which the method of the exemplary embodiment includes the following steps (that will be detailed with reference to the remaining figures):

Step 0 - Apply the simulated delayed and jittered data stream to the JBM and read the JBM output data stream.

Step 1 - Evaluate the JBM initial waiting time as the delay from the moment the first element of the data stream enters the JBM to the moment it comes out.

Step 2 - Build the grid with nodes (i.j), where: i is frame progressive number in JBM output sequence; j is the frame progressive number in reference sequence.

Step 3 - Find the likelihood between the JBM output data stream and the reference stream.

Step 4 - Find the optimal path through the grid nodes that represents the optimal alignment between the two data streams.

Step 5 - Compute the amount of de-sequences in the optimal path (different weights for silence and speech).

Step 6 - Evaluate the amount of delay gained through the output sequence with respect to the reference one.

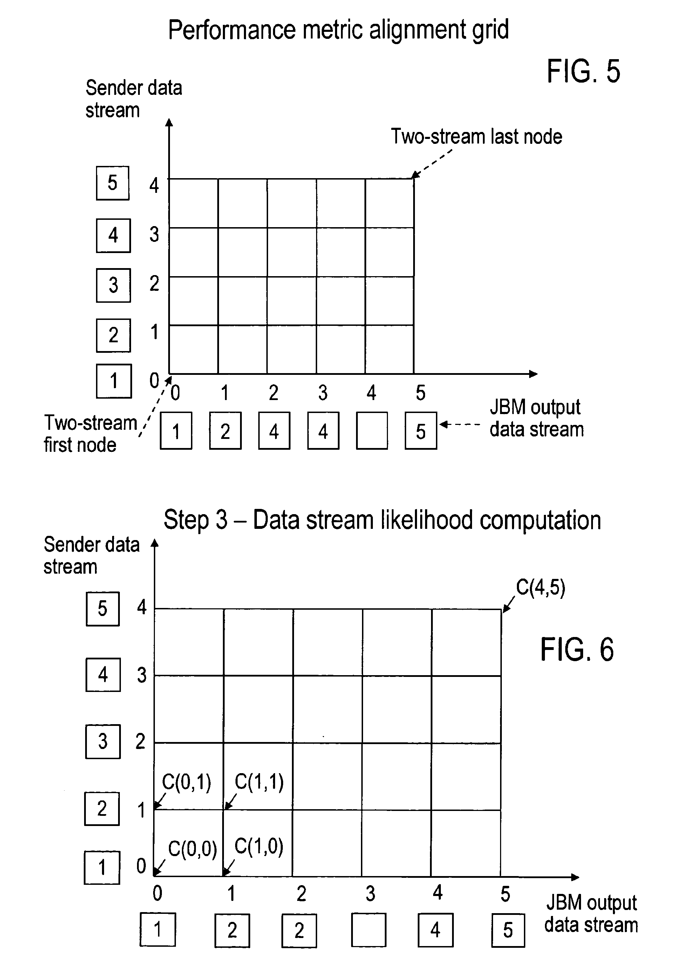

With reference to **fig.5** we see a performance metric alignment grid where each node is computed at the cross-point between rows and column of a matrix. The sender data stream (packets) is represented on the ordinate (index j), while the JBM output data stream is represented on the abscissa (index i). The first and the last nodes are indicated by arrows.

**Fig.6** outlines four nodes of the used grid as example to be extended to all nodes for calculating in Step 3 the delay vectors needed for tracing the optimal path along the grid. Computation at Step 3 includes the following substeps:

- Assign a weight to each node depending whether it connects the same frame in the two streams or different frames. For example: weight 0 in the first case (concordance) or 1 in the second case (discordance). In the present case based on searching of the optimum path using a minimum metric criterion, the weight to assign in case of concordance of the frames at the cross-point is lower than in case of discordance; an opposite assignment should be true in case of optimizing with maximum metric criterion.

- Mark the nodes on the axes as visited and associate a cost (c) equal to the node weight 0 or 1.

- Find a node (i,j) with the three predecessors (i-1,j), (i,j-1) and (i-1,j-1) marked as visited. Associate an optimal predecessor to node (i,j), that is the predecessor with the minimum cost. Associate to node (i,j) a cost (c) that is the sum of the cost of the optimal predecessor (opt_pre) plus the weight of node (i,j). For the example in the figure:

$$c(1,1) = w(1,1) + \min(c(0,0),\ c(0,1),c(1,0))$$

$$\text{opt\_pre}(0,0) = \text{argmin}(c(0,0) + c(1,0) + c(0,1))$$

- Repeat the previous step until node (i,j) becomes the node corresponding to the last frames of the two streams. The cost associated to this node represents the likelihood of the JBM output data stream with respect to the reference one. For the example in the figure: c(4,5) = data streams likelihood.

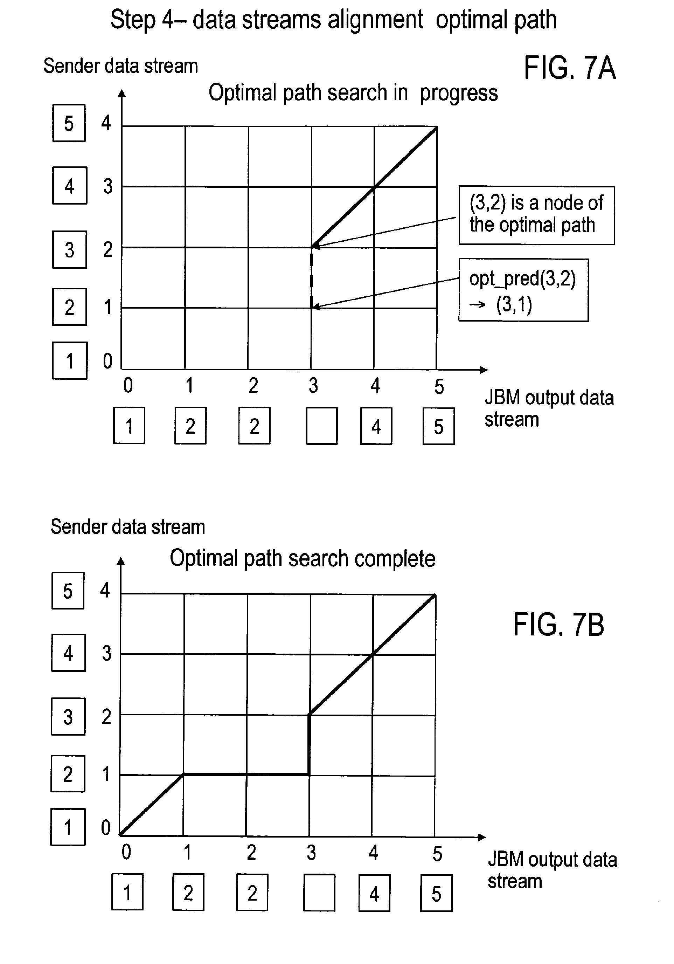

**Figures 7A** and **7B**, account for finding in Step 4 the data streams alignment optimal path. **Fig.7A** refers to optimal path search in progress while the optimal path search complete is shown in **fig.7B**.With reference to these figures, Step 4 includes the following substeps:

- Mark the node corresponding to the last frames of the two streams as a node of the optimal path.

- If node (i,j) is marked as a node of the optimal path, mark its optimal predecessor as a node of the path.

- Repeat the previous step until node (i,j) becomes the node (0,0), that is the node corresponding to the first frames of the two sequences.

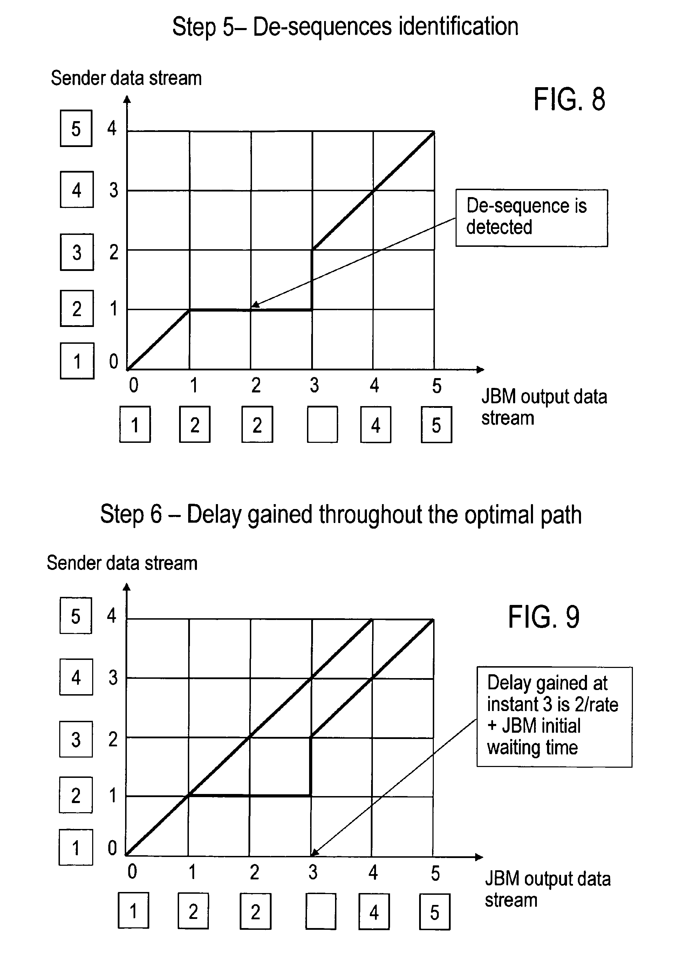

**Fig.8** represents de-sequences identification of Step 5. With reference to **fig.8** in Step 5:

- A de-sequence occurs when a node of the optimal path corresponds to different frames in the two data streams.

• The amount of de-sequences over a certain number of output frames, possibly computed using different weights for silence or speech, is the first JBM performance score.

**Fig.9** represents delay gained throughout the optimal path of Step 6. With reference to fig.9, in Step 6 the amount of delay gained at a certain instant in the JBM output data stream is equal to the horizontal distance that the corresponding node in the path has from the 45° line, divided by the stream data rate and added to the JBM initial waiting time. For example in the figure the delay gained at instant 3 is 2/rate + JBM initial waiting time. The average delay is the algebraic summation of delays gained at all instants (packet times). The 45° line path represent an ideal path wherein all packets of the sender data stream at the input of the JBL buffer are present at the output without any de-sequence and delay other than the physiological latency. The distance from the 45° line of the ideal path is given in number of packets.

Although the invention has been described with particular reference to a preferred embodiment, it will be evident to those skilled in the art, that the present invention is not limited thereto, but further variations and modifications may be applied without departing from the scope of the claims.

## Claims

1.  Method for testing the performance of known buffering algorithms (JBM) in terms of average delay and number of de-sequences evaluated at the output when a packet data stream affected by time jitter and de-sequences is submitted at the input of a buffer subjected to one of said buffering algorithms (JBM), **characterized in that** includes the steps of:

    - forming a grid of nodes each one located at the cross-point between a row and a column of a matrix, wherein the elements of each column correspond to packets sent to the buffer input and the elements of each row correspond to output packets received from the buffer;
    - determining a cost for each node based on correspondence between packet sent and packet received;
    - calculating a minimum cost path crossing the grid;
    - estimating an average delay from the minimum cost path;
    - estimating a number of de-sequences from the minimum cost path.

2.  The method of claim 1, **characterized in that** a de-sequence is detected when a node of the minimum cost path corresponds to different packets in the input and output data streams.

3.  The method of claim 1 or 2, **characterized in that** said de-sequences are computed using different weights for silence or speech.

4.  The method of any claim from 1 to 3, **characterized in that** the amount of delay gained at a certain instant in the output data stream is equal to the horizontal distance in the grid that the corresponding node in the minimum cost path has from an ideal path resulting when all packets at the input of the buffer are present at the output without any de-sequence and delay other than the physiological latency.

5.  The method of claim 4, **characterized in that** said average delay is equal to the algebraic summation of delays gained at all packet times.

# Network model

FIG. 1

# CHANNEL & JBM data streams

Sender data stream
(reference sequence)

JBM input data stream
(Delayed and jittered )

JBM output data stream
(dejitterd)

FIG. 2

# JBM Performance estimation method

FIG. 3

JBM performance evaluation scores

# JBM performance evaluation steps

Performance evaluation reference data

```
┌ ─ ─ ─ ─ ─ ─ ─ ─ ─ ─ ─ ─ ─ ─ ─ ─ ─ ┐
│  ┌──────────┐   ┌──────────┐     │        ┌────────────────────┐
│  │ Reference│   │ Reference│     │        │      Step 0         │
│  │ frame    │   │ channel  │     │───────▶│ Apply the simulated │
│  │ sequence │   │ model    │     │        │ delayed and jittered│
│  └──────────┘   └──────────┘     │        │ data stream to the  │
└ ─ ─ ─ ─ ─ ─ ─ ─ ─ ─ ─ ─ ─ ─ ─ ─ ─ ┘        │ JBM and read the JBM│
                                              │ output data stream  │
                                              └────────────────────┘
```

**Reference frame sequence**

**Reference channel model**

**Step 0**
Apply the simulated delayed and jittered data stream to the JBM and read the JBM output data stream

**Voice Activity Detection:**
find when there is silence and when there is speech

**Step 2**
Build the grid with node (i,j)

**Step 3**
Data stream likelihood computation

**Step 1**
Evaluate the JBM initial waiting time

**Step 4**
Data streams alignment optimal path

**Step 5**
De-sequences identification

**Step 6**
Delay gained throughout the optimal path

## FIG. 4

## Performance metric alignment grid

FIG. 5

## Step 3 – Data stream likelihood computation

FIG. 6

# Step 4– data streams alignment  optimal path

Sender data stream

## FIG. 7A

Optimal path search in  progress

(3,2) is a node of
the optimal path

opt_pred(3,2)
→ (3,1)

JBM output data
stream

Sender data stream

Optimal path search complete

## FIG. 7B

JBM output data
stream

## Step 5– De-sequences identification

Sender data stream

FIG. 8

De-sequence is detected

JBM output data stream

## Step 6 – Delay gained throughout the optimal path

Sender data stream

FIG. 9

Delay gained at instant 3 is 2/rate + JBM initial waiting time

JBM output data stream

## EUROPEAN SEARCH REPORT

European Patent Office

Application Number

EP 06 42 5744

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 655 911 A (ZULTYS TECHNOLOGIES [US]) 10 May 2006 (2006-05-10) * abstract * * page 3, line 39 - line 58 * * page 6, line 49 - page 7, line 22 * ----- | 1-5 | INV. H04L12/56 |

TECHNICAL FIELDS SEARCHED (IPC)

H04L
G06F

The present search report has been drawn up for all claims

| Place of search | Date of completion of the search | Examiner |
|---|---|---|
| The Hague | 12 April 2007 | Lamadie, Sylvain |

EP 1 919 137 A1

## ANNEX TO THE EUROPEAN SEARCH REPORT
## ON EUROPEAN PATENT APPLICATION NO.

EP 06 42 5744

This annex lists the patent family members relating to the patent documents cited in  the above-mentioned European search report.
The members are as contained in the European Patent Office EDP file on
The European Patent Office is in no way liable for these particulars which are merely given for the purpose of information.

12-04-2007

| Patent document cited in search report | | Publication date | Patent family member(s) | | Publication date |
|---|---|---|---|---|---|
| EP 1655911 | A | 10-05-2006 | JP | 2006135974 A | 25-05-2006 |
| | | | US | 2006092918 A1 | 04-05-2006 |

EPO FORM P0459

For more details about this annex : see Official Journal of the European Patent Office, No. 12/82

14